# EUROPEAN PATENT SPECIFICATION

(11) **EP 4 528 397 B1**
(45) Date of publication and mention of the grant of the patent: **04.11.2026**
(21) Application number: 24194296.0
(22) Date of filing: 13.08.2024
(51) Int. Cl.: G05B 13/04, G05B 17/02, G05B 19/418, G06N 20/00, G06N 3/006, G05B 23/02

(54) **ARTIFICIAL INTELLIGENCE MODEL FOR OPERATING A PLANT**
MODELL DER KÜNSTLICHEN INTELLIGENZ ZUM BETRIEB EINER ANLAGE
MODÈLE D'INTELLIGENCE ARTIFICIELLE POUR FAIRE FONCTIONNER UNE INSTALLATION

(30) Priority: 19.09.2023 IN 202311062877; 16.11.2023 US 202318511560
(43) Date of publication of application: 26.03.2025
(73) Proprietor: Schneider Electric Systems USA, Inc., Foxborough, MA 02035 (US)
(72) Inventor: BHATTACHARYYA, Amitabha, 500019 Hyderabad (IN); KOTTANA, Venkateswara Rao, 531036 Visakhapatnam (IN); BENDLE, Suhas, 442907 Chandrapur (IN); SINHA, Bhaskar, 500019 Hyderabad (IN); GONDHI, Dinesh, Norwood, 02062 (US); MISHRA, Ajay, Irvine, 92620 (US); BANCHIK, Erna, Rancho Santa Margarita, 92688 (US); IVANOV, Diana, Mission Viejo, CA, 92692 (US)
(74) Representative: Openshaw & Co.

(56) References cited:
- WO-A1-2022/184260
- US-A1- 2021 271 234
- US-A1- 2021 312 262

## Description

### CROSS-REFERENCE TO RELATED APPLICATIONS

This application claims priority from Indian Patent Application No. 202311062877 filed on September 19, 2023 and from United States Patent Application No. 18/511,560 filed on November 16, 2023, which claims priority from Indian Patent Application No. 202311062877 filed on September 19, 2023.

### FIELD

The present disclosure generally relates to a machine-learned model for use in an industrial plant.

### BACKGROUND

Industrial plants may encounter process upsets and shutdowns within the plant. Process upsets and shutdowns may negatively impact plant performance and safety. Hence, it is important to mitigate the upsets and shutdowns as soon as possible to reduce the impact the upsets and shutdowns have on the plant.

Prior art document US 2021/271234 A1 discloses training and deploying a reinforcement-learning industrial plant controller using simulated plant trajectories and rewards. Prior art document US 2021/312262 A1 discloses training and fine-tuning a neural network using simulated and experimental machining data for chatter/stability prediction.

Current mitigating operations that are taken to stabilize processes within the industrial plant and prevent hazards are largely dependent on plant operators' knowledgebase and experience levels. In some instances, it can take plant operators hours to a few days to determine an optimal mitigating strategy for stabilizing the plant, then additional time for implementation. In other instances, plant operators may be required to act immediately to stabilize the plant, without having time to determine the optimal mitigating strategy. Both instances may incur additional hazards to the plant.

Therefore, improved systems and methods are needed to determine and implement an optimal mitigating strategy for stabilizing a plant during a process upset or plant shutdown.

### SUMMARY

Aspects of the present disclosure permit building and utilizing an artificial intelligence (AI) model for plant operation. In an example implementation, the AI model is trained using reinforcement learning based on past process disturbance data and extrapolated scenarios using a digital twin environment.

One aspect of the present disclosure involves a computer-implemented method according to claim 1.

In another aspect, a system for operating an industrial plant according to claim 11 is provided.

Other objects and features will be in part apparent and in part pointed out hereinafter.

### BRIEF DESCRIPTION OF THE DRAWINGS

FIG. 1 is a block diagram illustrating a system for operating an industrial plant according to an embodiment.
FIG. 2 is an illustration of an example of determining a composite action reward according to an embodiment.
FIG. 3 is a flow diagram illustrating an example process of a machine-learned model of the system according to an embodiment.

Corresponding reference characters indicate corresponding parts throughout the drawings.

### DETAILED DESCRIPTION

A system for operating an industrial plant 8 is generally indicated at reference number 10. The system 10 comprises a data store 12, a digital twin 14, and a machine-learned model 16 with action scheduler 18, stabilizing agent 20, disrupting agent 22, and composite action reward 24, prediction generator 26, and operating instructions generator 28. The system 10 is configured to monitor operating variables relating to plant operations within the industrial plant 8 to obtain a training variable input. The digital twin 14 is configured to simulate the plant operations based on the training variable input. The machine-learned model 16 is configured to process the training variable input using the digital twin 14 as a processing environment. The machine-learned model 16 evaluates an initial degree of shutdown within the digital twin 14. The action scheduler 18 schedules either the stabilizing agent 20 or disrupting agent 22 to act in the digital twin 14. The machine-learned model 16 evaluates a subsequent degree of shutdown to analyze a post-action state of the digital twin 14. Suitably, the machine-learned model 16 obtains the composite action reward 24 based on the change of degree of shutdown within the digital twin 14 from the initial state to the post-action state. The prediction generator 26 generates a prediction based on the composite action reward 24 that optimizes the degree of shutdown to provide a mitigating strategy to perform within the industrial plant 8. The operating instructions generator 28 generates operating instructions to perform in the industrial plant 8, based on the prediction. Plant operators may use the system 10 to monitor plant operations (including process upsets and plant shutdowns) within the plant 8. As explained in further detail below, the plant operator may use the machine-learned model 16 to efficiently determine and implement an optimal mitigating strategy for stabilizing the industrial plant 8 during process upsets or plant shutdowns.

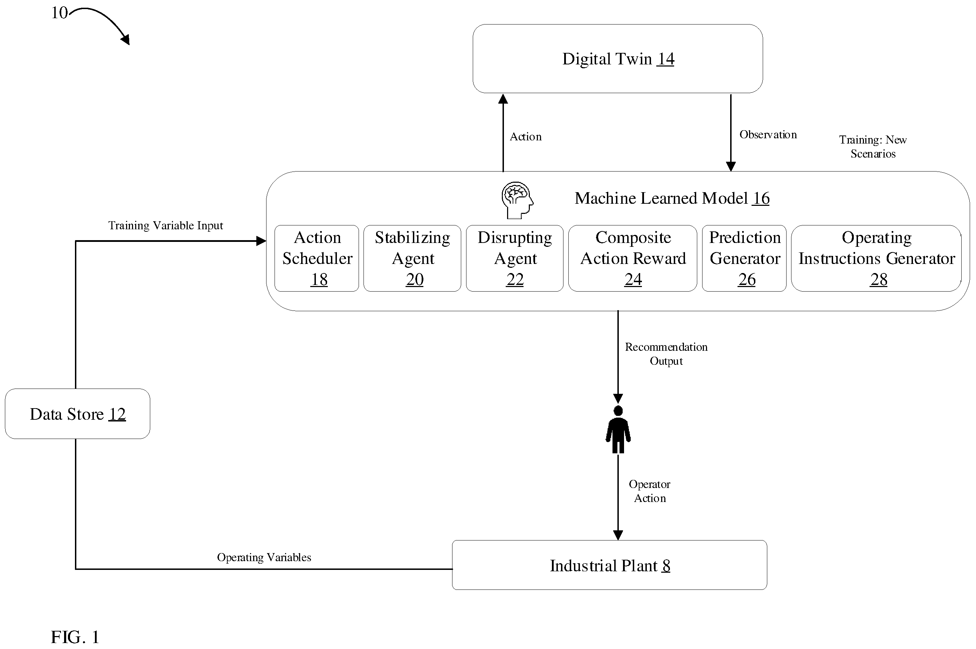

The industrial plant 8 of the present disclosure may refer to any facility which is used in connection with or as part of any process or system for industrial production. Process upsets may include any instances within the industrial plant 8 that cause a disruption to process flow, quality, and throughput. Plant shutdowns may include any instances within the plant that stop process flow entirely. As shown in FIG. 1, the system 10 is configured to operate the entire industrial plant 8, but it will be understood that the system 10 may be configured to operate individual components of the industrial plant 8 such as equipment, processes and sub-processes.

The data store 12 is configured to monitor and store a plurality of operating variables relating to plant operations in the industrial plant 8. The operating variables comprise, for example, at least one of operator actions data, alarms data, process behavior data, safety data, equipment data, and constraints data, however it will be apparent to a person skilled in the art that the operating variables may include other data relevant to plant operations without departing from the scope of the present disclosure. The data store 12 may further comprise a pre-processing component that is configured to pre-process the operating variables based on scenarios including one or more industrial processes to be considered for training. The data store is configured to send the operating variables as a training variable input to the digital twin 14 and machine-learned model 16.

The digital twin 14 is configured to simulate the industrial plant 8 and simulate plant operations based at least in part on the training variable input from the data store 12. The digital twin 14 provides a processing environment in which the machine-learned model may use to process the training variable input from the data store 12.

The machine-learned model 16 is configured to receive the training variable input from the data store 14 and process the training variable input to provide an optimal mitigating strategy for stabilizing the plant 8 during a process upset or shutdown. The machine-learned model 16 utilizes the degree of shutdown to assess process health, as the degree of shutdown determines the likelihood of a shutdown occurring based on operating variable values and standard operating conditions criteria. The standard operating conditions criteria defines regions of operating conditions within the industrial plant 8 (i.e., low damage region, high damage region, safe region). The machine-learned model 16 includes the action scheduler 18 configured to schedule either the stabilizing agent 20 or the disrupting agent 22. The action scheduler 18 determines which agent to schedule based on at least one of an initial degree of shutdown and historical operating data from the plant 8. In an embodiment, the action scheduler 18 is further configured to determine a time frame based on a hyper-parameter in which the respective action must be executed. The hyper-parameter is configured to be modified based on at least one or more training requirements.

The stabilizing agent 20 is configured to perform stabilizing actions in the digital twin 14 by modifying one or more operating variables of the digital twin 14 to maintain or reduce the degree of shutdown. The stabilizing actions are based on operator actions taken within the industrial plant 8 to stabilize the plant, as well as mitigating strategies from engineering documents. Alternatively, the disrupting agent 22 is configured to perform disrupting actions in the digital twin 14 by modifying one or more operating variables within the digital twin to increase the degree of shutdown. The disrupting actions are based on historical process upset and plant shutdown data as well as extrapolated operations scenarios.

The machine-learned model 16 is further configured to obtain the composite action reward 24 based on at least a change of degree of shutdown from an initial state of the digital twin 14 relative to a post-action state of the digital twin. The composite action reward 24, in one example, is configured for a parameter independent of degree of shutdown, by using absolute values of the parameter and configuring desired values. The composite action reward 24 comprises a state reward, state change reward and directional reward. The state reward determines whether the degree of shutdown of the initial state of the digital twin 14 and the degree of shutdown of the post-action state of the digital twin is the same. The state-change reward determines whether the degree of shutdown of the initial state and the degree of shutdown of the post-action state is different. The directional award determines whether the degree of shutdown of the post-action state is either closer to or further away from a degree of shutdown of a desired (i.e., safe) operating state than the degree of shutdown of the initial state. The composite action reward 24 will either reward or penalize the machine-learned model 16 based on the state reward, state-change reward and directional reward as explained in further detail below.

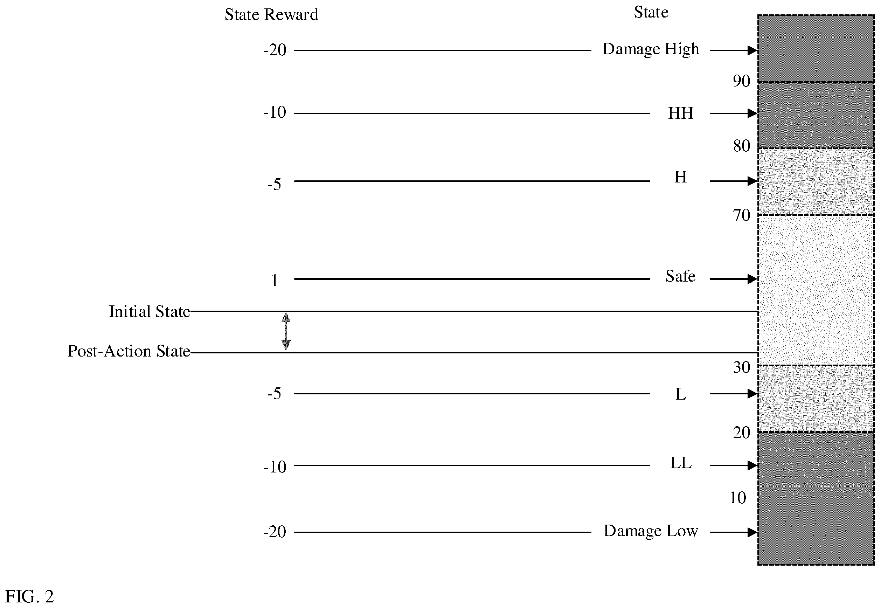

In the example of FIG. 2:
Assume Tank Level: 100 m
**Composite Reward** = a1*state_reward + b1* state_change_reward + c1* directional_reward
**State Reward:** EX: Digital twin state is in L - LL(i.e. 20-30) region, the machine-learned model will be penalized for the time it spent in that region.
**State Change Reward:** EX: Digital twin state shifts to Safe region(30-70); the machine-learned model will be rewarded for the movement.
**Directional Reward:** EX: While digital twin state is in L-LL(20-30), the machine-learned model is getting penalized for being in that state, but the directional reward will provide positive rewards to move towards (25 ->27) safe region. a1,b1,c1 are constants which can be tuned based on a scenario type

Based on the composite action reward 24, the prediction generator 26 of the machine-learned model 16 is configured to generate a prediction for optimizing the degree of shutdown, plant performance and safety in the industrial plant 8. The prediction comprises one or more stabilizing actions, that were performed in the digital twin 14 to optimize the degree of shutdown, and a predicted degree of shutdown for each stabilizing action. Accordingly, the operating instructions generator 28 of the machine-learned model is configured to generate operating instructions based on the prediction. The operating instructions generator 28 organizes the one or more stabilizing actions of the prediction into operator instructions to perform in the industrial plant 8. The system 10 is configured to communicate the prediction and operating instructions as a recommendation output to a plant operator via a display. The plant operator may use the recommendation output to determine how to stabilize the industrial plant 8 during a process upset or plant shutdown. Further, the plant operator may perform operator actions within the industrial plant 8 based on the operating instructions to stabilize the industrial plant 8. In one suitable embodiment, the system 10 may include a controller configured to automatically execute the operating instructions within the industrial plant 8 to stabilize the plant.

The system 10, as discussed above comprises the machine-learned model 16 and is configured for operating an industrial plant. A computer-implemented method for training the machine-learned model for use in an industrial plant is further described below. Initially, the data store 12 stores operating variables relating to plant operations. The data store 12 sends the operating variables as a training variable input to the digital twin 14 and the machine-learned model 16. The digital twin 14 simulates plant operations of the industrial plant 8 based on the training variable input.

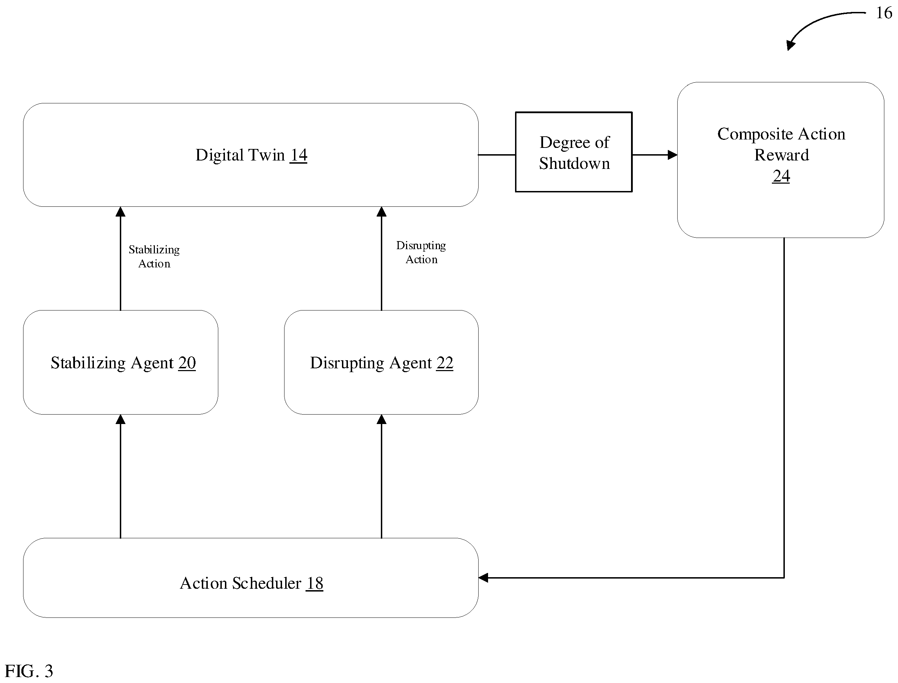

Referring now to FIG. 3 the machine-learned model 16 processes the training variable input. First, the machine-learned model 16 evaluates an initial degree of shutdown based on standard operating conditions criteria to analyze an initial state of the digital twin 14. The action scheduler 18 determines, based on at least one of the initial degree of shutdown and historical plant operating data, whether to schedule the stabilizing agent 20 or disrupting agent 22 to execute either a stabilizing action or disrupting action within the digital twin 14. Furthermore, the action scheduler 18 determines a time frame in which either the stabilizing agent 20 or disrupting agent 22 must execute either the stabilizing or disrupting action. The scheduled agent executes at least one of the stabilizing action or disrupting action to modify one or more operating variables within the digital twin 14. The machine-learned model 16 evaluates a subsequent degree of shutdown based on the same standard operating conditions criteria to analyze a post-action state of the digital twin 14. The machine-learned model 16 compares the subsequent degree of shutdown to the initial degree of shutdown to determine a change in the degree of shutdown within the digital twin 14. The machine-learned model 16 determines and obtains the composite action reward 24 based on at least the change of degree of shutdown within the digital twin 14.

The machine-learned model 16 processes the training variable input until the composite action reward 24 is optimized such that the degree of shutdown within the digital twin 14 is in a safe region. The prediction generator 26 of the machine-learned model 16 generates a prediction based on the composite action reward 24, thereby generating a prediction that optimizes the degree of shutdown in the industrial plant 8. Moreover, the operating instructions generator 28 generates operating instructions with operator actions to perform in the industrial plant 8 based on the prediction. In one embodiment the system 10 automatically performs the operator actions within the industrial plant 8 via the controller. In another embodiment, the system 10 communicates the operating instructions and prediction via a recommendation output to a plant operator via the display for the plant operator to perform in the industrial plant 8.

According to the invention, the method further comprises validating and retraining the machine-learned model 16. Suitably, an initial degree of shutdown of an initial state of the industrial plant 8 is evaluated. Operator actions based on the operating instructions of the digital twin 14 are performed and monitored in the industrial plant 8. A subsequent degree of shutdown of a post-operator-action state of the industrial plant 8 is evaluated. The initial degree of shutdown of the initial state of the industrial plant 8 is compared to the subsequent degree of shutdown of the post-operator-action state to determine a change in the degree of shutdown within the industrial plant 8. A comparison between the change of degree of shutdown within the digital twin 14 and the industrial plant 8 is evaluated to assess performance of the machine-learned model 16. Based on the comparison, one or more parameters of the machine-learned model 16 are modified to retrain the machine-learned model.

To use the machine-learned model 16 for predicting a future degree of shutdown within the industrial plant 8 and for developing a future mitigating strategy, the method according to an embodiment further comprises creating an extrapolated training variable input based on an extrapolated scenario of the industrial plant. The extrapolated training variable input may be sent to the digital twin 14 to simulate the extrapolated scenario within the digital twin. Suitably the machine-learned model 16 processes the extrapolated training variable input to provide a recommendation output of the extrapolated scenario.

In one embodiment, the method is used for building and utilizing the machine-learned model 16 for plant operation. The method generally involves capturing operator actions during operation of the industrial plant 8 and more particularly operator actions performed in response to process upsets and shutdowns within the industrial plant. The machine-learned model 16 is trained based at least in part on the operator actions and other operating variables relevant to the operation of the plant 8 and its associated equipment, processes and sub-processes. The machine-learned model 16 utilizes agents 20,22 trained using reinforcement learning on past process disturbances and extrapolated scenarios by using the digital twin 14 as the processing environment. The system 10 is configured to detect and predict future process upsets and shutdowns within the industrial plant 8. The machine-learned model 16 is trained using the composite action reward 24, such that the machine-learned model is rewarded to keep the operating variables in a safe state based on the degree of shutdown within the industrial plant 8.

Advantageously, the present disclosure provides systems and methods for determining and implementing an optimal mitigating strategy for stabilizing an industrial plant during a process upset or plant shutdown. The system continuously monitors operating variables within the plant to determine the degree of shutdown within the plant. This enables plant operators to quickly detect process upsets and shutdowns. Furthermore, the machine-learned model is configured to maintain an optimized degree of shutdown within the digital twin by performing stabilizing actions. The system communicates the stabilizing actions to the plant operator via a recommendation output. The recommendation output provides a mitigating strategy for stabilizing the plant that optimizes plant performance and safety. The system achieves a plant stabilizing process that eliminates variation in the process due to operator experience levels and knowledgebase, as well as reduces the time plant operators spend determining a mitigating strategy to perform in the plant.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as an artificial intelligence model for operating a plant and/or as a machine-learned method and system for use in operating an industrial plant and/or as follows, optionally in combination with one or more of the above-mentioned features of the present invention: A digital twin of the industrial plant is configured to simulate plant operations based on operating variables from a data store. A machine-learned model comprises a stabilizing agent and a disrupting agent. The stabilizing agent modifies the operating variables within the digital twin to perform a stabilizing action for limiting a degree of shutdown and the disrupting agent modifies the operating variables within the digital twin to perform a disruptive action for increasing the degree of shutdown. A composite action reward is configured to reward the machine-learned model for reducing the degree of shutdown from an initial state of the digital twin to a post-action-state of the digital twin.

## Claims

1. Computer-implemented method for training a machine-learned model (16) for use in an industrial plant (8), the method comprising:
obtaining a training variable input from a data store (12), the data store (12) configured to store a plurality of operating variables relating to plant operations in the industrial plant (8);
simulating the plant operations with a digital twin (14) of the industrial plant (8);
processing the training variable input with the machine-learned model (16) for:
evaluating an initial degree of shutdown based on standard operating conditions criteria to analyze an initial state of the digital twin (14) of the industrial plant (8);
executing at least one of a stabilizing action and a disrupting action to modify one or more operating variables within the digital twin (14);
evaluating a subsequent degree of shutdown based on the standard operating conditions criteria to analyze a post-action state of the digital twin (14);
comparing the subsequent degree of shutdown to the initial degree of shutdown to determine a change in degree of shutdown within the digital twin (14); and
obtaining a composite action reward (24) based on at least the change of degree of shutdown within the digital twin (14), said composite action reward (24) configured to reward the machine learned-model (16) for reducing the subsequent degree of shutdown relative to the initial degree of shutdown;
generating a prediction based on the composite action reward (24), said prediction configured for optimizing the degree of shutdown in plant operations in the industrial plant (8),
evaluating an initial degree of shutdown of an initial state of the industrial plant (8), monitoring operator actions performed in the industrial plant (8), evaluating a subsequent degree of shutdown of a post-operator-action state of the industrial plant (8), comparing the initial degree of shutdown to the subsequent degree of shutdown to determine a change in degree of shutdown within the industrial plant (8); and
evaluating a comparison between the change of degree of shutdown within the digital twin (14) to the change of degree of shutdown within the industrial plant (8) and modifying one or more parameters of the machine-learned model (16) based at least in part on the comparison to retrain the machine-learned model (16)..

2. Method as set forth in claim 1, further comprising pre-processing the operating variables within the data store (12) based on an industrial process.

3. Method as set forth in any one of claims 1 or 2, wherein said evaluating the degree of shutdown comprises determining the likelihood of a shutdown occurring based on operating variable values.

4. Method as set forth in any one of claims 1-3, further comprising determining whether to execute the stabilizing action or disruptive action based on at least one of the initial degree of shutdown of the digital twin (14) and historical plant operating data from the industrial plant (8).

5. Method as set forth in claim 4, wherein said executing at least one of the stabilizing action and the disrupting action to modify one or more operating variables within the digital twin (14) further comprises determining a time frame based on a hyper-parameter in which the respective action must be executed, wherein the hyper-parameter is configured to be modified based on at least one or more training requirements.

6. Method as set forth in any one of claims 1-5, wherein said executing the stabilizing action comprises modifying one or more of the operating variables within the digital twin (14) to maintain or reduce the degree of shutdown in the digital twin (14).

7. Method as set forth in any one of claims 1-6, wherein said executing the disruptive action comprises modifying one or more of the operating variables within the digital twin (14) to increase the degree of shutdown in the digital twin (14).

8. Method as set forth in any one of claims 1-7, wherein said determining the composite action reward (24) comprises determining a state reward to evaluate whether the degree of shutdown of the initial state and the degree of shutdown of the post-action state is the same, determining a state change reward to evaluate whether the degree of shutdown of the initial state and the degree of shutdown of the post-action state is different and determining a directional reward to evaluate whether the degree of shutdown of the post-action state is either closer to or further away from a degree of shutdown of a desired operating state than the degree of shutdown of the initial state.

9. Method as set forth in any one of claims 1-8, further comprising generating operating instructions to perform in the industrial plant (8) based on the prediction, and at least one of communicating the operating instructions to the operator for the operator to perform in the industrial plant (8) and automatically performing the operator instructions in the industrial plant (8) via a controller.

10. Method as set forth in any one of claims 1-9, further comprising processing an extrapolated training variable input based on an extrapolated scenario within the industrial plant (8) with the machine-learned model (16), and simulating the extrapolated scenario within the digital twin (14) to predict a future degree of shutdown within the industrial plant (8) and to determine a mitigating strategy for the extrapolated scenario.

11. A system (10) for operating an industrial plant (8), the system (10) comprising:
a data store (12) comprising a plurality of operating variables relating to plant operations within the industrial plant (8);
a digital twin (14) of the industrial plant (8), wherein the digital twin (8) is configured to simulate plant operations based on the operating variables from the data store (12);
a machine-learned model (16) comprising:
a stabilizing agent (20) configured to modify one or more of the operating variables within the digital twin (14) to perform at least one stabilizing action in the digital twin (14), wherein the stabilizing action is configured to limit a degree of shutdown, wherein the degree of shutdown is representative of a likelihood of a shutdown in the plant operations occurring based on present values of the operating variables in a given state;
a disrupting agent (22) configured to modify one or more of the operating variables within the digital twin (14) to perform at least one disruptive action in the digital twin (14), wherein the disruptive action is configured to increase the degree of shutdown;
an action scheduler (18) configured to schedule either the stabilizing agent (20) to perform the stabilizing action or the disrupting agent (22) to perform the disruptive action; and
a composite action reward (24) configured to reward the machine-learned model (16) for reducing the degree of shutdown from an initial state of the digital twin (14) to a post-action-state of the digital twin (14), the composite action reward (24) being further configured to penalize the machine-learned model (16) for increasing the degree of shutdown from an initial state of the digital twin (14) to a post-action-state of the digital twin (14);
a prediction generator (26) configured to generate a prediction based on the composite action reward (24);
an operating instructions generator (28) configured to generate operating instructions based on the prediction for optimizing the plant operations; and
wherein the machine -learned model (16) is configured to evaluate an initial degree of shutdown of an initial state of the industrial plant (8), monitor operator actions performed in the industrial plant (8), evaluate a subsequent degree of shutdown of a post-operator-action state of the industrial plant (8), compare the initial degree of shutdown to the subsequent degree of shutdown to determine a change in degree of shutdown within the industrial plant (8), evaluate a comparison between the change of degree of shutdown within the digital twin (14) to the change of degree of shutdown within the industrial plant (8), and modify one or more parameters of the machine-learned model (16) based at least in part on the comparison to retrain the machine-learned model (16).

12. System (10) as set forth in claim 11, wherein the disrupting actions are based on historical process upset data.

13. System (10) as set forth in claim 12, wherein the composite action reward (24) comprises a state reward to evaluate whether a degree of shutdown of the initial state and a degree of shutdown of the post-action state is the same, a state change reward to determine whether the degree of shutdown of the initial state and the degree of shutdown of the post-action state is different and a directional reward to determine whether the degree of shutdown of the post-action state is either closer to or further away from a degree of shutdown of a desired operating state than the degree of shutdown of the initial state.

## Patentansprüche

1. Computerimplementiertes Verfahren zum Trainieren eines maschinell lernenden Modells (16) für den Einsatz in einer Industrieanlage (8), wobei das Verfahren Folgendes umfasst:
Abrufen einer Trainingsvariablen aus einem Datenspeicher (12), der so konfiguriert ist, dass er mehrere Betriebsvariablen in Bezug auf den Anlagenbetrieb in der Industrieanlage (8) speichert;
Simulieren des Anlagenbetriebs mit einem digitalen Zwilling (14) der Industrieanlage (8);
Verarbeiten der Trainingsvariablen mit dem maschinell lernenden Modell (16) zur:
Bewertung eines anfänglichen Abschaltgrades auf Basis von Standardbetriebsbedingungen, um den Anfangszustand des digitalen Zwillings (14) der Industrieanlage (8) zu analysieren;
Ausführen mindestens einer stabilisierenden oder einer störenden Maßnahme, um eine oder mehrere Betriebsvariablen im digitalen Zwilling (14) zu modifizieren;
Bewertung eines nachfolgenden Abschaltgrades auf Basis der Standardbetriebsbedingungen, um den Zustand des digitalen Zwillings (14) nach der Maßnahme zu analysieren;
Vergleich des nachfolgenden Abschaltgrades mit dem anfänglichen Abschaltgrad, um eine Änderung des Abschaltgrades im digitalen Zwilling (14) zu ermitteln; und
Erhalten einer zusammengesetzten Aktionsbelohnung (24) basierend auf mindestens der Änderung des Abschaltgrades im digitalen Zwilling (14), wobei diese zusammengesetzte Aktionsbelohnung (24) so konfiguriert ist, dass das maschinell gelernte Modell (16) für die Reduzierung des nachfolgenden Abschaltgrades relativ zum anfänglichen Abschaltgrad belohnt wird;
Erzeugen einer Vorhersage basierend auf der zusammengesetzten Aktionsbelohnung (24), wobei diese Vorhersage so konfiguriert ist, dass der Abschaltgrad im Anlagenbetrieb der Industrieanlage (8) optimiert wird;
Bewertung eines anfänglichen Abschaltgrades eines Anfangszustands der Industrieanlage (8); Überwachung der in der Industrieanlage (8) durchgeführten Bedieneraktionen; Bewertung eines nachfolgenden Abschaltgrades eines Zustands der Industrieanlage (8) nach der Bedieneraktion; Vergleich des anfänglichen Abschaltgrades mit dem nachfolgenden Abschaltgrad, um eine Änderung des Abschaltgrades in der Industrieanlage (8) zu ermitteln. und
Auswertung eines Vergleichs zwischen der Änderung des Abschaltgrades im digitalen Zwilling (14) und der Änderung des Abschaltgrades in der Industrieanlage (8) sowie Anpassung eines oder mehrerer Parameter des maschinell gelernten Modells (16) basierend zumindest teilweise auf diesem Vergleich, um das maschinell gelernte Modell (16) neu zu trainieren.

2. Verfahren nach Anspruch 1, ferner umfassend die Vorverarbeitung der Betriebsvariablen im Datenspeicher (12) basierend auf einem industriellen Prozess.

3. Verfahren nach einem der Ansprüche 1 oder 2, wobei die Auswertung des Abschaltgrades die Bestimmung der Wahrscheinlichkeit eines Abschaltvorgangs basierend auf den Werten der Betriebsvariablen umfasst.

4. Verfahren nach einem der Ansprüche 1 bis 3, ferner umfassend die Bestimmung, ob eine stabilisierende oder eine störende Maßnahme ausgeführt werden soll, basierend auf dem anfänglichen Abschaltgrad des digitalen Zwillings (14) und/oder historischen Betriebsdaten der Industrieanlage (8).

5. Verfahren nach Anspruch 4, wobei die Ausführung mindestens einer stabilisierenden und/oder störenden Aktion zur Änderung einer oder mehrerer Betriebsvariablen im digitalen Zwilling (14) ferner die Bestimmung eines Zeitrahmens auf Basis eines Hyperparameters umfasst, in dem die jeweilige Aktion ausgeführt werden muss. Der Hyperparameter ist so konfiguriert, dass er auf Basis mindestens einer Trainingsanforderung geändert wird.

6. Verfahren nach einem der Ansprüche 1 bis 5, wobei die Ausführung der stabilisierenden Aktion die Änderung einer oder mehrerer Betriebsvariablen im digitalen Zwilling (14) umfasst, um den Abschaltgrad des digitalen Zwillings (14) aufrechtzuerhalten oder zu verringern.

7. Verfahren nach einem der Ansprüche 1 bis 6, wobei die Ausführung der störenden Aktion die Änderung einer oder mehrerer Betriebsvariablen im digitalen Zwilling (14) umfasst, um den Abschaltgrad des digitalen Zwillings (14) zu erhöhen.

8. Verfahren nach einem der Ansprüche 1 bis 7, wobei das Bestimmen der zusammengesetzten Aktionsbelohnung (24) Folgendes umfasst: Bestimmen einer Zustandsbelohnung zur Bewertung, ob der Abschaltgrad des Ausgangszustands und der Abschaltgrad des Zustands nach der Aktion gleich sind; Bestimmen einer Zustandsänderungsbelohnung zur Bewertung, ob sich der Abschaltgrad des Ausgangszustands und der Abschaltgrad des Zustands nach der Aktion unterscheiden; und Bestimmen einer Richtungsbelohnung zur Bewertung, ob der Abschaltgrad des Zustands nach der Aktion näher an einem Abschaltgrad eines gewünschten Betriebszustands liegt oder weiter davon entfernt ist als der Abschaltgrad des Ausgangszustands.

9. Verfahren nach einem der Ansprüche 1 bis 8, ferner umfassend: Generieren von Betriebsanweisungen zur Ausführung in der Industrieanlage (8) auf der Grundlage der Vorhersage sowie mindestens einen der folgenden Schritte: Übermitteln der Betriebsanweisungen an den Bediener zur Ausführung durch den Bediener in der Industrieanlage (8) oder automatisches Ausführen der Betriebsanweisungen in der Industrieanlage (8) mittels einer Steuerung.

10. Verfahren nach einem der Ansprüche 1 bis 9, ferner umfassend: Verarbeiten einer extrapolierten Trainingsvariablen-Eingabe auf der Grundlage eines extrapolierten Szenarios innerhalb der Industrieanlage (8) mit dem maschinell gelernten Modell (16) sowie Simulieren des extrapolierten Szenarios innerhalb des digitalen Zwillings (14), um einen zukünftigen Abschaltgrad innerhalb der Industrieanlage (8) vorherzusagen und eine Minderungsstrategie für das extrapolierte Szenario zu bestimmen.

11. System zum Betreiben einer Industrieanlage (8), wobei das System Folgendes umfasst:
einen Datenspeicher (12), der eine Vielzahl von Betriebsvariablen in Bezug auf den Anlagenbetrieb innerhalb der Industrieanlage (8) enthält;
einen digitalen Zwilling (14) der Industrieanlage (8), wobei der digitale Zwilling (14) dazu konfiguriert ist, den Anlagenbetrieb auf der Grundlage der Betriebsvariablen aus dem Datenspeicher (12) zu simulieren; ein maschinell gelerntes Modell (16), umfassend:
einen Stabilisierungsagenten (20), der dazu konfiguriert ist, eine oder mehrere der Betriebsvariablen innerhalb des digitalen Zwillings (14) zu modifizieren, um mindestens eine stabilisierende Maßnahme im digitalen Zwilling (14) durchzuführen, wobei die stabilisierende Maßnahme dazu konfiguriert ist, einen Abschaltgrad zu begrenzen, wobei der Abschaltgrad repräsentativ für eine Wahrscheinlichkeit ist, dass es im Anlagenbetrieb zu einer Abschaltung kommt, basierend auf aktuellen Werten der Betriebsvariablen in einem gegebenen Zustand;
einen Störungsagenten (22), der dazu konfiguriert ist, eine oder mehrere der Betriebsvariablen innerhalb des digitalen Zwillings (14) zu modifizieren, um mindestens eine störende Maßnahme im digitalen Zwilling (14) durchzuführen, wobei die störende Maßnahme dazu konfiguriert ist, den Abschaltgrad zu erhöhen;
einen Maßnahmenplaner (18), der dazu konfiguriert ist, entweder den Stabilisierungsagenten (20) zur Durchführung der stabilisierenden Maßnahme oder den Störungsagenten (22) zur Durchführung der störenden Maßnahme einzuplanen; und
eine zusammengesetzte Maßnahmenbelohnung (24), die dazu konfiguriert ist, das maschinell gelernte Modell (16) für die Verringerung des Abschaltgrads von einem Ausgangszustand des digitalen Zwillings (14) zu einem Zustand des digitalen Zwillings (14) nach der Maßnahme zu belohnen, wobei die zusammengesetzte Maßnahmenbelohnung (24) ferner dazu konfiguriert ist, das maschinell gelernte Modell (16) für die Erhöhung des Abschaltgrads von einem Ausgangszustand des digitalen Zwillings (14) zu einem Zustand des digitalen Zwillings (14) nach der Maßnahme zu bestrafen;
einen Vorhersagegenerator (26), der dazu konfiguriert ist, eine Vorhersage auf der Grundlage der zusammengesetzten Maßnahmenbelohnung (24) zu erzeugen;
einen Betriebsanweisungsgenerator (28), der dazu konfiguriert ist, Betriebsanweisungen auf der Grundlage der Vorhersage zur Optimierung des Anlagenbetriebs zu erzeugen; und
wobei das maschinell gelernte Modell (16) dazu konfiguriert ist, einen anfänglichen Abschaltgrad eines Anfangszustands der Industrieanlage (8) zu bewerten, in der Industrieanlage (8) durchgeführte Bedienerhandlungen zu überwachen, einen nachfolgenden Abschaltgrad eines Zustands der Industrieanlage (8) nach der Bedienerhandlung zu bewerten, den anfänglichen Abschaltgrad mit dem nachfolgenden Abschaltgrad zu vergleichen, um eine Änderung des Abschaltgrads innerhalb der Industrieanlage (8) zu bestimmen, einen Vergleich zwischen der Änderung des Abschaltgrads innerhalb des digitalen Zwillings (14) und der Änderung des Abschaltgrads innerhalb der Industrieanlage (8) auszuwerten und einen oder mehrere Parameter des maschinell gelernten Modells (16) zumindest teilweise auf der Grundlage des Vergleichs zu modifizieren, um das maschinell gelernte Modell (16) neu zu trainieren.

12. System nach Anspruch 11, wobei die störenden Handlungen auf historischen Daten zu Prozessstörungen basieren.

13. System nach Anspruch 12, wobei die zusammengesetzte Belohnung für eine Handlung (24) Folgendes umfasst: eine Zustandsbelohnung zur Bewertung, ob ein Abschaltgrad des Anfangszustands und ein Abschaltgrad des Zustands nach der Handlung gleich sind; eine Zustandsänderungsbelohnung zur Bestimmung, ob sich der Abschaltgrad des Anfangszustands und der Abschaltgrad des Zustands nach der Handlung unterscheiden; und eine Richtungsbelohnung zur Bestimmung, ob der Abschaltgrad des Zustands nach der Handlung entweder näher an einem Abschaltgrad eines gewünschten Betriebszustands liegt oder weiter davon entfernt ist.

## Revendications

1. Procédé mis en œuvre par ordinateur pour entraîner un modèle d'apprentissage automatique (16) destiné à être utilisé dans une installation industrielle (8), le procédé comprenant :
l'obtention d'une entrée de variable d'entraînement à partir d'un magasin de données (12), le magasin de données (12) étant configuré pour stocker une pluralité de variables de fonctionnement relatives aux opérations de l'installation industrielle (8) ;
la simulation des opérations de l'installation au moyen d'un jumeau numérique (14) de l'installation industrielle (8) ;
le traitement de l'entrée de variable d'entraînement par le modèle d'apprentissage automatique (16) pour :
évaluer un degré initial d'arrêt sur la base de critères de conditions de fonctionnement normales afin d'analyser un état initial du jumeau numérique (14) de l'installation industrielle (8) ;
exécuter au moins une action parmi une action de stabilisation et une action de perturbation pour modifier une ou plusieurs variables de fonctionnement au sein du jumeau numérique (14) ;
évaluer un degré ultérieur d'arrêt sur la base des critères de conditions de fonctionnement normales afin d'analyser un état du jumeau numérique (14) postérieur à l'action ;
comparer le degré ultérieur d'arrêt au degré initial d'arrêt pour déterminer une variation du degré d'arrêt au sein du jumeau numérique (14) ; et
obtenir une récompense d'action composite (24) basée au moins sur la variation du degré d'arrêt au sein du jumeau numérique (14), ladite récompense d'action composite (24) étant configurée pour récompenser le modèle d'apprentissage automatique (16) pour avoir réduit le degré ultérieur d'arrêt par rapport au degré initial d'arrêt ;
générer une prédiction basée sur la récompense d'action composite (24), ladite prédiction étant configurée pour optimiser le degré d'arrêt des opérations de l'installation industrielle (8),
évaluer un degré initial d'arrêt d'un état initial de l'installation industrielle (8), surveiller des actions d'opérateur effectuées dans l'installation industrielle (8), évaluer un degré ultérieur d'arrêt d'un état de l'installation industrielle (8) postérieur à l'action de l'opérateur, comparer le degré initial d'arrêt au degré ultérieur d'arrêt pour déterminer une variation du degré d'arrêt au sein de l'installation industrielle (8) ; et
évaluer une comparaison entre la variation du degré d'arrêt au sein du jumeau numérique (14) et la variation du degré d'arrêt au sein de l'installation industrielle (8), et modifier un ou plusieurs paramètres du modèle d'apprentissage automatique (16) sur la base, au moins en partie, de ladite comparaison afin de réentraîner le modèle d'apprentissage automatique (16).

2. Procédé selon la revendication 1, comprenant en outre le prétraitement des variables de fonctionnement contenues dans le magasin de données (12) en fonction d'un procédé industriel.

3. Procédé selon l'une quelconque des revendications 1 ou 2, dans lequel ladite évaluation du degré d'arrêt comprend la détermination de la probabilité de survenance d'un arrêt sur la base des valeurs des variables de fonctionnement.

4. Procédé selon l'une quelconque des revendications 1 à 3, comprenant en outre la détermination de l'opportunité d'exécuter l'action de stabilisation ou l'action perturbatrice sur la base du degré initial d'arrêt du jumeau numérique (14) et/ou de données historiques de fonctionnement de l'installation industrielle (8).

5. Procédé selon la revendication 4, dans lequel ladite exécution de l'action de stabilisation et/ou de l'action perturbatrice visant à modifier une ou plusieurs variables de fonctionnement au sein du jumeau numérique (14) comprend en outre la détermination, sur la base d'un hyperparamètre, d'un laps de temps durant lequel l'action respective doit être exécutée, ledit hyperparamètre étant configuré pour être modifié en fonction d'une ou plusieurs exigences d'apprentissage.

6. Procédé selon l'une quelconque des revendications 1 à 5, dans lequel ladite exécution de l'action de stabilisation comprend la modification d'une ou plusieurs variables de fonctionnement au sein du jumeau numérique (14) afin de maintenir ou de réduire le degré d'arrêt dans le jumeau numérique (14).

7. Procédé selon l'une quelconque des revendications 1 à 6, dans lequel ladite exécution de l'action perturbatrice comprend la modification d'une ou plusieurs variables de fonctionnement au sein du jumeau numérique (14) afin d'augmenter le degré d'arrêt dans le jumeau numérique (14).

8. Procédé selon l'une quelconque des revendications 1 à 7, dans lequel ladite détermination de la récompense d'action composite (24) comprend la détermination d'une récompense d'état pour évaluer si le degré d'arrêt de l'état initial et le degré d'arrêt de l'état post-action sont identiques, la détermination d'une récompense de changement d'état pour évaluer si le degré d'arrêt de l'état initial et le degré d'arrêt de l'état post-action sont différents, et la détermination d'une récompense directionnelle pour évaluer si le degré d'arrêt de l'état post-action est plus proche ou plus éloigné d'un degré d'arrêt d'un état de fonctionnement souhaité que le degré d'arrêt de l'état initial.

9. Procédé selon l'une quelconque des revendications 1 à 8, comprenant en outre la génération d'instructions de fonctionnement à exécuter dans l'installation industrielle (8) à partir de la prédiction, et au moins l'une des actions suivantes : la communication des instructions de fonctionnement à l'opérateur pour son exécution dans l'installation industrielle (8) et l'exécution automatique de ces instructions dans l'installation industrielle (8) par l'intermédiaire d'un contrôleur.

10. Procédé selon l'une quelconque des revendications 1 à 9, comprenant en outre le traitement d'une variable d'apprentissage extrapolée, basée sur un scénario extrapolé au sein de l'installation industrielle (8), à l'aide du modèle d'apprentissage automatique (16), et la simulation du scénario extrapolé dans le jumeau numérique (14) afin de prédire le degré d'arrêt futur de l'installation industrielle (8) et de déterminer une stratégie d'atténuation pour ce scénario.

11. Système d'exploitation d'une installation industrielle (8), comprenant :
un référentiel de données (12) contenant plusieurs variables de fonctionnement relatives aux opérations de l'installation industrielle (8) ;
Un jumeau numérique (14) de l'installation industrielle (8), configuré pour simuler le fonctionnement de l'installation à partir des variables de fonctionnement issues de la base de données (12) ;
un modèle d'apprentissage automatique (16) comprenant :
un agent de stabilisation (20) configuré pour modifier une ou plusieurs variables de fonctionnement du jumeau numérique (14) afin d'effectuer au moins une action de stabilisation. Cette action de stabilisation est configurée pour limiter le degré d'arrêt, lequel est représentatif de la probabilité d'arrêt de l'installation en fonction des valeurs actuelles des variables de fonctionnement dans un état donné ;
un agent de perturbation (22) configuré pour modifier une ou plusieurs variables de fonctionnement du jumeau numérique (14) afin d'effectuer au moins une action de perturbation. Cette action de perturbation est configurée pour augmenter le degré d'arrêt. un planificateur d'actions (18) configuré pour programmer soit l'agent de stabilisation (20) pour effectuer l'action de stabilisation, soit l'agent de perturbation (22) pour effectuer l'action de perturbation ; et
une récompense d'action composite (24) configurée pour récompenser le modèle d'apprentissage automatique (16) lorsqu'il réduit le degré d'arrêt entre l'état initial et l'état post-action du jumeau numérique (14), cette récompense d'action composite (24) étant également configurée pour pénaliser le modèle d'apprentissage automatique (16) lorsqu'il augmente le degré d'arrêt entre l'état initial et l'état post-action du jumeau numérique (14) ;
un générateur de prédictions (26) configuré pour générer une prédiction basée sur la récompense d'action composite (24) ;
un générateur d'instructions d'exploitation (28) configuré pour générer des instructions d'exploitation basées sur la prédiction afin d'optimiser le fonctionnement de l'installation. et
dans lequel le modèle d'apprentissage automatique (16) est configuré pour évaluer le degré d'arrêt initial de l'état initial de l'installation industrielle (8), surveiller les actions de l'opérateur effectuées dans l'installation industrielle (8), évaluer le degré d'arrêt ultérieur de l'état de l'installation industrielle (8) après l'action de l'opérateur, comparer le degré d'arrêt initial au degré d'arrêt ultérieur afin de déterminer une variation du degré d'arrêt au sein de l'installation industrielle (8), évaluer une comparaison entre la variation du degré d'arrêt dans le jumeau numérique (14) et la variation du degré d'arrêt au sein de l'installation industrielle (8), et modifier un ou plusieurs paramètres du modèle d'apprentissage automatique (16) en se basant au moins en partie sur cette comparaison afin de réentraîner le modèle d'apprentissage automatique (16).

12. Système selon la revendication 11, dans lequel les actions perturbatrices sont basées sur des données historiques de perturbations de processus.

13. Système selon la revendication 12, dans lequel la récompense d'action composite (24) comprend une récompense d'état pour évaluer si le degré d'arrêt de l'état initial et le degré d'arrêt de l'état post-action sont identiques, une récompense de changement d'état pour déterminer si le degré d'arrêt de l'état initial et le degré d'arrêt de l'état post-action sont différents et une récompense directionnelle pour déterminer si le degré d'arrêt de l'état post-action est plus proche ou plus éloigné d'un degré d'arrêt d'un état de fonctionnement souhaité que le degré d'arrêt de l'état initial.
